## Europäisches Patentamt

## European Patent Office

## Office européen des brevets

(19)

(11) Publication number: **0 132 550**

**A1**

(12)

# EUROPEAN PATENT APPLICATION

(21) Application number: 84106366.2

(22) Date of filing: 04.06.84

(51) Int. Cl.⁴: **C 01 B 33/28**
**C 01 B 33/20**

(30) Priority: 27.06.83 US 507848

(43) Date of publication of application:
13.02.85 Bulletin 85/7

(84) Designated Contracting States:
BE DE FR GB IT NL

(71) Applicant: NORTON COMPANY
1 New Bond Street
Worcester Massachusetts 01606(US)

(72) Inventor: Saleh, Ramzi Yanni
604 Trommel Drive
Baton Rouge Louisiana(US)

(74) Representative: Baillie, Iain Cameron et al,
c/o Ladas & Parry Isartorplatz 5
D-8000 München 2(DE)

(54) Novel zeolite and process for preparation.

(57) A family of zeolites containing combined titanium, silicon, and oxygen is produced by hydrothermal synthesis of a mixture of a titanate, silica, and an amino-alkyl bromide in an aqueous alkaline solution.

The invention is a new synthetic zeolite consisting essentially of silica and titania, and the method for its synthesis.

Both natural and synthetic alumino-silicate zeolites have been synthesized in the laboratory and some have been commercially produced. Zeolites having a crystalline structure similar to that of natural and synthetic alumino-silicate zeolites, but consisting entirely or almost entirely of silica have been synthesized recently, as disclosed in U.S. Patents 4,073,865, to Flanigan, which refers to the product as a silica polymorph, and 4,061,724 to Gross, which names the product "silicalite".

The present invention is a molecular sieve zeolite which contains mostly silica with the remainder being from 2 to 20% titania, and a process for making the zeolite.

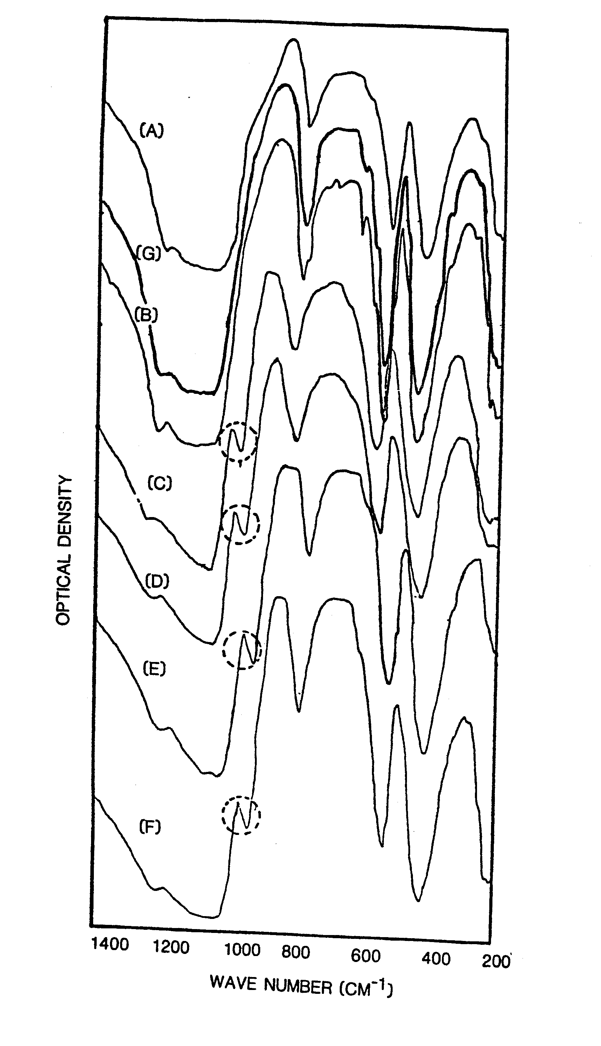

Reference is made to the accompanying drawing which shows infra-red absorption spectra of the invention and of silicalite and silicalite mixed with titania.

The product of the invention is a molecular sieve zeolite consisting of combined silicon, titanium, and oxygen, and has molecular sieve and catalytic properties similar to the ZSM-5 zeolites described in U.S. Patent 3,702,886.

An example of the synthesis of the zeolite is as follows: A reaction mixture containing 11932 gm $H_2O$, 142 gm sodium titanate, 880 gm tetra-n-propylammonium bromide, 3546 gm silica sol (40 wt % $SiO_2$) and 32 gm NaOH was pre-

DOCKET H-1685

pared. The mixture which had a pH of 10.85 was autoclaved at 165°C. for 163 hours in a five gallon stirred autoclave. The solid product was separated from the mother liquor by filtration, washed to a neutral pH then dried at 110°C. overnight. No titania was detected in the recovered mother liquor. The sodium titanate employed in this example was an acid salt of the formula $NaTiO_3H$, available from Cerak, Inc., Milwaukee, Wisconson.

The X-ray diffraction pattern of the product was found to be similar to that of ZSM-5. Differential thermal analysis of the product showed intense bands at around 375 to 500°C., indicating the presence of the tetrapropylammonium component. No bands were found in the 500 to 1100°C. temperature range.

The chemical composition of the material was as follows:

| | |
|---|---|
| $Na_2O$ | 0.15 wt % |
| $Al_2O_3$ | 0.1 wt % |
| $SiO_2$ | 85% |
| $TiO_2$ | 4.55 |
| C | 8.61 |
| N | 0.70 |

A portion of the product was examined by SEM. The micrograph shows highly crystalline curved edge rectangular prisomatic crystals exhibiting extreme uniformity in size - the crystals measure about 5 x 7.5 x 2 pm. The absence of twinning was noted.

The product was also analyzed by infrared spectroscopy. The IR shows no bands at 700 $cm^1$. Silicalite and silicapolymorph of Union Carbide showed bands at 700 $cm^1$.

IR spectra of titania/silica molecular sieves of this invention, and silicalite were obtained and are shown in the drawing. It can be seen that titania/silica sieves (Spectrum C) have an absorption band at around 950 $cm^{-1}$ that is absent in silicalite (Spectrum A). Furthermore, this band is also seen in the spectra of three acid treated titania/silica sieve samples (Spectra D, E and F) from which 1%, 19% and 39% respectively of the original titania was leached out.

Absence of 950 cm$^{-1}$ absorption band in spectra of silicalite containing either rutile or anatase (curves B and G), which are two crystalline forms of titania, proves that the presence of this band in the titania/silica sieve is not caused by titania occluded in a silicalite structure.

This band is also absent in the IR spectrum of silicalite containing 4% sodium titanate, which is the source of titania in the preferred formulation. Therefore, this absorption band could not be caused by residual sodium titanate.

From examination of this data, it is obvious that this material is unique and different from silicalite and titania is not present as an occluded extraneous material.

0132550

## C L A I M S

1.      A crystalline molecular sieve consisting essentially of combined silicon, titanium, and oxygen.

2.      A crystalline molecular sieve according to claim 1,
which includes from 2 to 20% titanium calculated as titanium
dioxide.

3.      A crystalline molecular sieve according to claim 1
or 2, having an infra-red absorption band at about $950cm^{1}$.

4.      A method of making a crystalline molecular sieve
according to any one of the preceding claims, which comprises
reacting an aqueous alkaline mixture of a soluble titanate,
silica, and an amino-alkyl halide under hydrothermal conditions until crystallization of the zeolite.

DOCKET H-1685

0132550

OPTICAL DENSITY

(A)

(G)

(B)

(C)

(D)

(E)

(F)

WAVE NUMBER (CM⁻¹)

1400  1200  1000  800  600  400  200

European Patent
Office

**EUROPEAN SEARCH REPORT**

0132550
Application number

EP 84 10 6366

## DOCUMENTS CONSIDERED TO BE RELEVANT

| Category | Citation of document with indication, where appropriate, of relevant passages | Relevant to claim | CLASSIFICATION OF THE APPLICATION (Int. Cl ³) |
|---|---|---|---|
| A | US-A-3 329 481 (D.A. YOUNG) <br> * claim 1; example VI * | 1,2 | C 01 B 33/28 <br> C 01 B 33/20 |
| A | EP-A-0 077 522 (HOECHST) <br> * claims 1-3,5 * | 1,2,4 | |
| A | EP-A-0 027 736 (NATIONAL RES. DEV. CO.) <br> * page 3, line 6 - page 4, line 11 * | 1,2,4 | |
| P,A | EP-A-0 094 024 (HOECHST) | | |
| D,A | US-A-3 702 886 (R.J. ARGAUER et al.) | | |

TECHNICAL FIELDS
SEARCHED (Int. Cl. ³)

C 01 B 33/00
B 01 J 29/00

The present search report has been drawn up for all claims

| Place of search | Date of completion of the search | Examiner |
|---|---|---|
| THE HAGUE | 15-10-1984 | KESTEN W.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82